# NEW EUROPEAN PATENT SPECIFICATION

(11) **EP 0 390 391 B2**
(45) Date of publication and mention of the opposition decision: **20.12.2000**
(45) Mention of the grant of the patent: 10.05.1995
(21) Application number: 90302944.5
(22) Date of filing: 19.03.1990
(51) Int. Cl.: G11B 5/708, G11B 5/71, G11B 5/714, G11B 5/716, G11B 5/66, G11B 5/68

(54) **A magnetic recording medium with improved electromagnetic conversion characteristics and anti-environment properties**
Magnetischer Aufzeichnungsträger mit verbesserter elektromagnetischer Umwandlungscharakteristik und Schutz gegen Umwelteinflüsse
Milieu d'enregistrement magnétique avec caractéristiques de conversion électromagnétique modifiées et propriétés de protection contre la pollution

(30) Priority: 28.03.1989 JP 7745089; 29.03.1989 JP 7930789
(43) Date of publication of application: 03.10.1990
(73) Proprietor: KONICA CORPORATION, Tokyo 160 (JP)
(72) Inventor: Koyama, Noboru, Konica Corporation, Tokyo (JP); Nakano, Yasushi, Konica Corporation, Tokyo (JP)
(74) Representative: Simpson, Alison Elizabeth Fraser

(56) References cited:
- EP-A- 0 125 150
- EP-A- 0 360 175
- EP-A- 0 573 563
- DE-A- 3 430 760
- JP-A- 6 419 524
- JP-A- 63 187 418
- JP-A- 63 224 025
- PATENT ABSTRACTS OF JAPAN, unexamined applications, P field, vol. 11, no. 362,November 26, 1987 THE PATENT OFFICE JAPANESE GOVERNMENT page 147 P 640

## Description

### FIELD OF THE INVENTION

The present invention relates to a magnetic recording medium such as magnetic tapes, magnetic disks and magnetic floppy disks, more particularly to a magnetic recording medium with improved electromagnetic conversion characteristics which is suited for use as a video tape.

### BACKGROUND OF THE INVENTION

Recently, there has been a growing demand for a magnetic recording medium with a higher recording density. Especially in the area of video tapes, very high density recording is desired in combination with an increasing demand for shifting of recording frequency to a higher range, and there have been proposed various magnetic recording mediums in which a magnetic layer with a two-layer (upper and lower layers) or more than three-layer structure (hereinafter referred to as multilayer structure) is provided on a support.

As is well known, a magnetic recording medium is usually prepared by coating on a support a magnetic material prepared by dispersing uniformly a ferromagnetic powder, an abrasive, carbon black, a lubricant, a dispersant and a hardener in a binder of a synthetic or natural polymer material dissolved in a solvent to form magnetic layer; subjecting the magnetic layer to orientation; and drying.

There are various factors affecting the electromagnetic conversion characteristics and other properties of a magnetic recording medium. The representative factors are the kind and amount of ingredients, which interact with each other to affect the properties of the magnetic recording medium.

Various proposals have been made as to the kind and amount of ingredients to improve the properties of a magnetic recording medium. In spite of these efforts, a magnetic recording medium with improved properties has not yet been developed.

In JP-A-62-137 721 a magnetic recording medium is described comprising a non-magnetic support carrying two magnetic layers. The first has a coercive force of not more than 5 Oe and the second is composed of a ferromagnetic oxide (ferrite). The layers are deposited by vacuum deposition or plating to avoid the use of a binder and to enable the necessary high temperatures to be achieved to ensure correct orientation of the ferrite domains. The method of forming these layers is time consuming as the two layers cannot be coated simultaneously.

In EP-A-0 360 175 comprising state of the art under Article 54(3) EPC. a magnetic recording medium is disclosed comprising a support and provided thereon a plurality of layers, characterised in that the uppermost layer contains a Fe-Al ferromagnetic powder and a binder comprising a resin having a functional group.

### SUMMARY OF THE INVENTION

The object of the present invention is to provide a magnetic recording medium, in particular a multilayered magnetic tape suited for use as a video tape, which can have excellent electromagnetic conversion characteristics even at severe conditions such as high temperature and humidity.

The above object can be attained by a magnetic magnetic recording medium comprising a support and provided thereon a plurality of layers, characterised in that the uppermost layer contains a Fe-Al ferromagnetic powder having an average major axis length of not longer than 0.3 micrometres a binder comprising a resin having a functional group and the thickness of the uppermost layer is not more than 1.5 micrometres.

### DETAILED DESCRIPTION OF THE INVENTION

The ferromagnetic substances used for a magnetic recording medium are magnetic oxides such as γ-Fe₂O₃, Co-γ-Fe₂O₃ including Co-containing Fe₂O₃ and Co-coated γ-Fe₂O₃, Fe₃O₄, Co-γ-Fe₃O₄ including Co-containing Fe₃O₄ and Co-coated Fe₃O₄, and CrO₂; and magnetic metal powders composed mainly of Fe, Ni and Co, such as Fe, Ni, Fe-Ni alloys, Fe-Co alloys, Fe-Ni-P alloys, Fe-Ni-Co alloys, Fe-Mn-Zn alloys, Fe-Ni-Zn alloys, Fe-Co-Ni-Cr alloys, Fe-Co-Ni-P alloys, Co-P alloys and Co-Cr alloys. The magnetic metal powder may contain Si, Cu, Zn, Aℓ, P, Mn, and Cr as an additive.

In the present invention, it is essential that the uppermost layer of a magnetic recording medium contains Fe-Aℓ ferromagnetic powder. Further, it is preferred that a layer adjacent to the uppermost layer contains Fe-Ni ferromagnetic powder.

The preceding conventional ferromagnetic substances may also be added to the uppermost layer.

Magnetic layers other than the uppermost layer may contain either the preceding Fe-Aℓ ferromagnetic powder or conventional ferromagnetic substances.

To improve the characteristics of a magnetic recording medium including electromagnetic conversion characteristics, it is desirable to use as fine ferromagnetic powder as possible.

It is preferred that magnetic powder in the layer adjacent to the uppermost layer has the average major axis longer than that of the magnetic powder in the uppermost layer.

The uppermost layer contains a binder resin having a functional group. More preferably, such binder resin is contained in both the uppermost layer and the layer adjacent thereto. The examples of the binder resin having a functional group are a vinyl chloride resin having a potassium sulfonate group and a polyurethane resin having a sodium sulfonate group.

Various binders have heretofore been proposed for use in a magnetic recording medium. In the present invention, such conventional binders may be used together with the preceding resins having an anionic functional group.

The preferred example of such binder is abrasion-resistant polyurethane. Polyurethane has strong adhesion to other materials, a mechanical strength sufficient to endure repeatedly exerted stress or bending, and excellent resistance to abrasion and weather.

A cellulose resin and a vinyl chloride copolymer used in combination with the preceding polyurethane will improve the dispersibility of magnetic powder and increase the mechanical strength of the magnetic layer. An excessive layer hardness made by the single use of the cellulose resin or vinyl chloride polymer can be prevented by adding polyurethane.

The usable cellulose resins are cellulose ethers, cellulose inorganic acid esters, and cellulose organic acid esters. The preceding polyurethane and vinyl chloride copolymers may be partially hydrolyzed. The preferred examples of the vinyl chloride copolymer are vinyl chloride-vinyl acetate copolymers and vinyl chloride-vinyl acetate-vinyl alcohol copolymers.

Also usable are phenoxy resins, which have a high mechanical strength and excellent dimensional stability, resistance to heat, water and chemicals, and adhesive property. These merits, if combined with those of the preceding polyurethane, permit significant improvement in an aging stability of the physical properties of the magnetic recording medium.

It is also possible to use a mixture of the preceding resins and a thermoplastic resin, a thermosetting resin, a reactive resin or an electron beam irradiation setting resin.

In order to improve the durability of the magnetic layer, a hardener such as isocyanates may be contained in a magnetic coating material. The examples of aromatic isocyanates are tolylene diisocyanate (TDI) and adducts of these isocyanates and active hydrogen compound, and have preferably a molecular weight of 100 to 3,000. The examples of aliphatic isocyanates are hexamethylene diisocyanate (HMDI) and adducts of these isocyanates and active hydrogen compounds, and have preferably a molecular weight of 100 to 3,000. Of the aliphatic isocyanates, especially preferable are non-alicyclic isocyanates and adducts of these isocyanates and active hydrogen compounds. The magnetic coating material used to form the above-mentioned magnetic layer may contain various additives such as a dispersant, a lubricant, an abrasive, a matting agent and an antistatic agent.

The examples of a dispersant are phosphates, amine compounds, alkyl sulfates, fatty amides, higher alcohols, polyethylene oxides, sulfosuccinic acid, sulfosuccinate, surfactants and salts thereof. Also usable are salts of a polymer dispersant with an anionic functional group (e.g. -COOH). These dispersants may be used alone or in combination.

The examples of a lubricant are silicone oil, graphite, a carbon black graft polymer, molybdenum disulfide, tungsten disulfide, lauric acid, myristic acid, esters of a monobasic fatty acid with a carbon number of 12 to 16 and monohydric alcohols wherein the total carbon number is 21 to 23 (wax).

These lubricants are normally added in an amount of 0.2 to 20 parts by weight per 100 parts by weight of the binder.

The examples of an abrasive are conventional abrasives including aluminas such as fused alumina and α-alumina, silicon carbide, chromium oxide, corundum, artificial corundum, artificial diamond, garnet, and emery (composed mainly of corundum and magnetite). These abrasives have an average grain size of 0.05 to 5 µm, preferably 0.1 to 2 µm, and are used in an amount of 1 to 20 parts by weight per 100 parts by weight of the binder.

As a matting agent, organic powder and inorganic powder are used singly or in combination.

The preferable examples of the organic powder in the present invention are acryl styrene resins, benzoguanamine resin powder, melamine resin powder and phthalocyanine pigments. Also usable are polyolefinic resin powder, polyester resin powder, polyamide resin powder, polyimide resin powder and polyethylene fluoride resin powder. The examples of inorganic powder are silicon oxide, titanium oxide, aluminum oxide, calcium carbonate, barium sulfate, zinc oxide, tin oxide, aluminum oxide, chromium oxide, silicon carbide, calcium carbide, α-Fe₂O₃, talc, kaolin, calcium sulfate, boron nitride, zinc fluoride and molybdenum dioxide.

The examples of antistatic agents are electroconductive powder such as carbon black, graphite, tin oxide-antimony oxide compounds and titanium oxide-tin oxide-antimony oxide compounds, natural surfactants such as saponin; nonionic surfactants such as derivatives of alkylene oxide, glycerol and glycidol; cationic surfactants such as higher alkylamines; quaternary ammonium salts, pyridine and other heterocycles, phosphoniums and sulfoniums; anionic surfactants having an acidic group such as a carboxylic acid group, a sulfonic acid group, a phosphoric acid group, a sulfate group or a phosphate group; and amphoteric surfactants such as amino acids, aminosulfonic acids and sulfuric or phosphoric acid esters of aminoalcohol.

The examples of the solvent formulated in the preceding coating material or the diluent for applying this coating material are ketones such as acetone, methyl ethyl ketone, methyl isobutyl ketone and cyclohexanone; alcohols such as methanol, ethanol, propanol and butanol; esters such as methyl acetate, ethyl acetate, butyl acetate, ethyl lactate and ethylene glycol monoacetate; ethers such as glycol dimethyl ether, glycol monoethyl ether, dioxane and tetrahydrofuran; aromatic hydrocarbons such as benzene, toluene and xylene; and halogenated hydrocarbons such as methylene chloride, ethylene chloride, carbon tetrachloride, chloroform and dichlorobenzene.

The examples of the support are polyesters such as polyethylene terephthalate and polyethylene-2,6-naphthalate; polyolefines such as polypropylene; cellulose derivatives such as cellulose triacetate and cellulose diacetate; and plastics such as polyamide and polycarbonate. Also usable are metals such as Cu, Aℓ and Zn and ceramics such as glass, boron nitride and Si carbide.

The thickness of the support is normally about 3 to 100 µm, preferably 5 to 50 µm in the case of a magnetic recording medium in a film or sheet form. In the case of a magnetic disc or card, the support thickness is about 30 µm to 10 mm.

An interlayer may be provided between the support and the magnetic layer to improve adhesion.

Coating methods for forming the magnetic layer on the support are air doctor coating, blade coating, air knife coating, squeeze coating, impregnation coating, reverse roll coating, transfer roll coating, gravure coating, kiss coating, cast coating, spray coating and extrusion coating.

A magnetic layer can be formed on the support by two methods; one method in which coating and drying are repeated for each layer (the wet-on-dry coating method) and the other method in which layers are coated on a wet layer immediately or in sequence (the wet-on-wet coating method), either of which is applicable to the invention.

A non-magnetic layer may be formed on or under the magnetic layer, or between two magnetic layers. The uppermost layer has a thickness of not more than 1.5 µm and not less than 0.1 µm.

The magnetic layer formed on the support may be subjected to orientation treatment.

In this case, the strength of the orientation magnetic field is about 500 to 5,000 Gauss on an AC or DC basis. Drying temperature is about 50 to 120°C. Drying time is about 0.1 to 10 minutes. The magnetic layer may be subjected to surface smoothing treatment.

### EXAMPLES

The present invention will be described in more detail by the following examples.

### Example 1 (Comparative)

Magnetic coating materials of the following compositions for the uppermost layer and the layer adjacent thereto were each kneaded well, followed by the addition of five parts by weight of polyisocyanate (tradename: Colonate, produced by Nippon Polyurethane Industry Co., Ltd.). The above coating materials were then coated simultaneously on a support by a conventional method. Then, the coated layers were subjected to magnetic field orientation treatment and dried to prepare the magnetic recording medium in which the thicknesses of the upper magnetic layer and the lower magnetic layer are 0.8 µm and 3.2 µm, respectively.

### Examples 2 to 11

Magnetic recording mediums were prepared in the same manner as in Example 1, except that the ferromagnetic powder (I) and (II) and the thicknesses of the upper and lower layers were varied as shown in Table 1.

### Example 13

A magnetic recording medium was prepared in the same manner as in Example 12, except that the binder resins VAGH and XE-1 for the coating material for the uppermost layer were replaced by a vinyl chloride resin having a metal sulfonate group (MR110), produced by Nippon Zeon Co., Ltd) and polyurethane having a metal sulfonate group (UR8300, produced by Toyobo Co., Ltd.).

### Example 14

A magnetic recording medium was prepared in the same manner as in Example 12, except that the binder resins for the uppermost layer and the adjacent layer were varied to MR110 and UR8300, respectively.

### Comparisons 1 to 3

Comparative magnetic recording mediums were prepared in the same manner as in Example 1, except that the ferromagnetic powders were varied to those shown in Table 1.

### Coating material for the uppermost layer

| | (Unit: parts by weight) |
|---|---|
| Ferromagnetic powder (I) Fe-Aℓ (Hc: 1500 Oe, average major axis size: 0.35 µm) | 100 |
| Vinyl chloride-vinyl acetate-vinyl alcohol copolymer VAGH, produced by UCC | 10 |
| Polyester-polyurethane XE-1, produced by Takeda Chemical Industries Ltd. | 5 |
| Alumina (average grain size: 0.2 µm) | 5 |
| Carbon black | 1 |
| Myristic acid | 1 |
| Stearic acid | 1 |
| Butyl stearate | 1 |
| Methyl ethyl ketone | 100 |
| Cyclohexanone | 100 |
| Toluene | 100 |

### Coating material far the layer adjacent to the uppermost layer

| | (Unit: parts by weight) |
|---|---|
| Ferromagnetic powder (II) Co-γ-Fe₂O₃ (Hc: 750 Oe, average major axis size: 0.30 µm) | 100 |
| Vinyl chloride-vinyl acetate-vinyl alcohol copolymer VAGH | 10 |
| Polyester-polyurethane XE-1 | 5 |
| Myristic acid | 1 |
| Stearic acid | 1 |
| Butyl stearate | 1 |
| Methyl ethyl ketone | 100 |
| Cyclohexanone | 100 |
| Toluene | 100 |

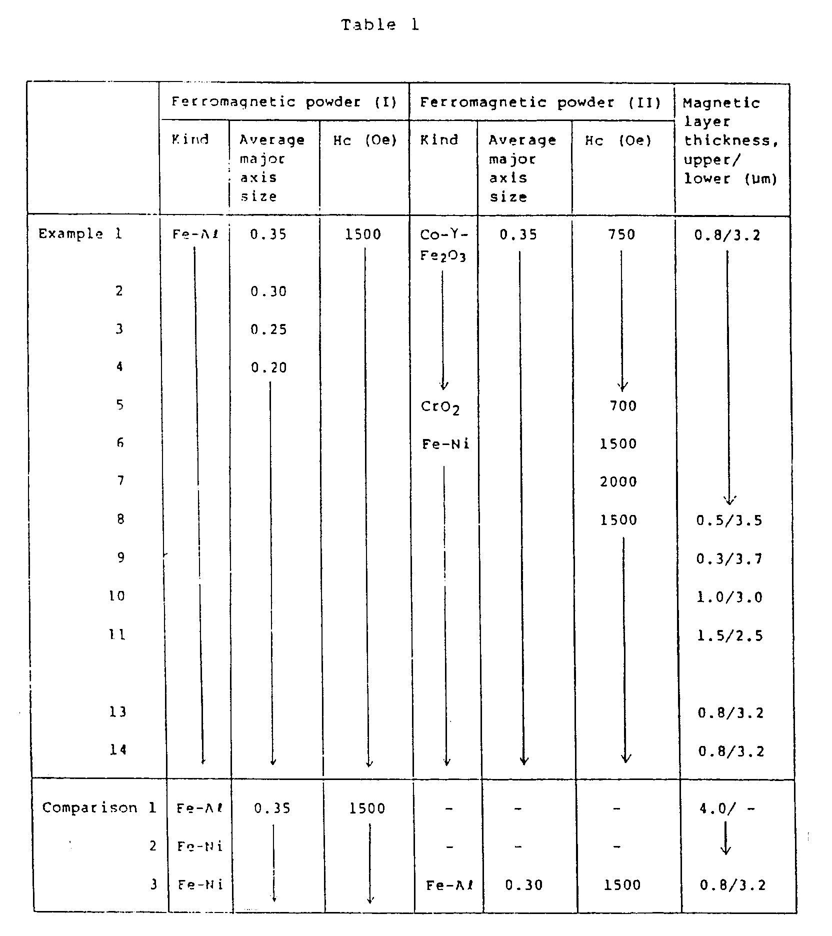

The magnetic recording mediums were evaluated for the following electromagnetic conversion characteristics and anti-environment property.

### Y-CN

(1) The magnetic recording tape was forwarded until the thickness of the tape wound on the winding reel became about 3 mm. From this point, a 6 MHz signal was recorded for 10 minutes, followed by reproduction three times. The recording was performed at a level of +20% of the optimum recording level.
(2) 5.0 and 7.0 MHz signals were each recorded for about 3 minutes on the portion subjected to recording and reproduction of the 6 MHz signal in (1). The recording was carried out at the level of +20% of the optimum recording level.

The RF reproduction output (referred to as C) and the C/N ratio of the magnetic tape were compared with those of a reference tape.

### Lumi S/N

A 100% white signal was inputted to the magnetic recording medium at a standard level. The reproduced video signal was inputted to 921D/1 (noise meter, produced by Shibasoku Co.). The lumi S/N was obtained from the absolute noise value.

### Chroma S/N

S/N difference in a chroma signal was measured with a noise meter (model 921D/1, produced by Shibasoku) in comparison with a reference tape.

### Anti-environment property: Bm′/Bm

Anti-environment property is defined by a percentage of the electromagnetic conversion characteristics after anti-environmental test (Bm′) to those before the same test (Bm), in which the sample was left at 60°C and 80%RH for seven days.

**Table 2**

| | Y-CN (dB) | | Lumi S/N (dB) | | Chroma S/N (dB) | | Anti-environment property (Bm'/Bm) (%) |
|---|---|---|---|---|---|---|---|
| | I 5.0 (MHz) | 7.0 (MHz) | Anti-environment test | | Anti-environment test | | |
| | | | Before | After | Before | After | |
| Example 1 | 0.2 | 0.1 | 0.2 | 0 | 0.5 | 0.3 | 92 |
| 2 | 0.6 | 0.5 | 0.5 | 0.3 | 0.5 | 0.3 | 93 |
| 3 | 0.7 | 0.5 | 0.7 | 0.5 | 0.6 | 0.4 | 93 |
| 4 | 0.8 | 0.6 | 1.0 | 0.8 | 0.6 | 0.4 | 93 |
| 5 | 0.8 | 0.6 | 1.0 | 0.8 | 0.8 | 0.6 | 94 |
| 6 | 0.9 | 0.7 | 1.2 | 0.9 | 1.6 | 1.4 | 94 |
| 7 | 0.9 | 0.7 | 1.2 | 0.9 | 1.5 | 1.3 | 93 |
| 8 | 0.9 | 0.7 | 1.2 | 1.0 | 1.9 | 1.7 | 92 |
| 9 | 0.9 | 0.7 | 1.2 | 1.0 | 2.2 | 2.0 | 92 |
| 10 | 0.9 | 0.7 | 1.2 | 1.0 | 1.3 | 1.1 | 93 |
| 11 | 0.9 | 0.7 | 1.2 | 1.0 | 1.0 | 0.8 | 94 |
| 13 | 1.7 | 1.6 | 2.0 | 1.8 | 1.6 | 1.4 | 94 |
| 14 | 1.8 | 1.6 | 2.1 | 1.9 | 2.0 | 1.8 | 94 |
| Comparison 1 | 0 | 0 | 0 | -0.2 | 0 | -0.3 | 93 |
| 2 | -0.2 | -0.3 | -0.1 | -1.2 | -1.1 | -1.9 | 75 |
| 3 | -0.1 | -0.2 | -0.1 | -1.3 | -0.5 | -1.6 | 80 |

As is evident from Table 2, the magnetic recording medium of the present invention has an excellent anti-environment property and well balanced electromagnetic conversion characteristics such as Y-CN, lumi S/N and chroma S/N even after the anti-environmental test.

On the other hand, the sample of Comparison 1 has the anti-environment property equal to the inventive samples, but inferior electromagnetic conversion characteristics after the anti-environmental test. In Comparisons 2 and 3, all characteristics tested were inferior to those of Examples.

## Claims

1. A magnetic recording medium comprising a support and provided thereon a plurality of layers, characterised in that the uppermost layer contains a Fe-Al ferromagnetic powder having an average major axis length of not longer than 0.3 micrometres, a binder comprising a resin having a functional group and the thickness of the uppermost layer is not more than 1.5 micrometres

2. The magnetic recording medium according to claim 1, characterised in that the average major axis length of the ferromagnetic powder contained in the layer adjacent to the uppermost layer is longer than that in the uppermost layer.

3. The magnetic recording medium according to claim 1, characterised in that a layer adjacent to the uppermost layer contains a Fe-Ni powder.

## Patentansprüche

1. Magnetisches Aufzeichnungsmaterial, umfassend einen Schichtträger und eine Mehrzahl von darauf befindlichen Schichten, dadurch gekennzeichnet, dass die oberste Schicht ein ferromagnetisches Fe-Al-Pulver einer durchschnittlichen Hauptachsenlänge von nicht mehr als 0,3 µm und ein Bindemittel in Form eines Harzes mit einer funktionellen Gruppe enthält und die Dicke der obersten Schicht nicht mehr als 1,5 µm beträgt.

2. Magnetisches Aufzeichnungsmaterial nach Anspruch 1, dadurch gekennzeichnet, dass die durchschnittliche Hauptachsenlänge des in der der obersten Schicht benachbarten Schicht enthaltenen ferromagnetischen Pulvers größer ist als diejenige des in der obersten Schicht enthaltenen ferromagnetischen Pulvers.

3. Magnetisches Aufzeichnungsmaterial nach Anspruch 1, dadurch gekennzeichnet, dass eine der obersten Schicht benachbart angeordnete Schicht ein Fe-Ni-Pulver enthält.

## Revendications

1. Un support d'enregistrement magnétique comprenant un support de base sur lequel sont appliquées une pluralité de couches, caractérisé en ce que la couche supérieure externe contient une poudre ferromagnétique Fe-Al présentant une longueur moyenne du grand axe égale ou inférieure à 0,3 micromètres, un liant comprenant une résine présentant un groupement fonctionnel, et en ce que l'épaisseur de la couche supérieure externe ne dépasse pas 1,5 micromètres.

2. Le support d'enregistrement magnétique de la revendication 1, caractérisé en ce que la longueur moyenne du grand axe de la poudre ferromagnétique contenue dans la couche contiguë à la couche supérieure externe est supérieure à celle dans la couche supérieure externe.

3. Le matériau d'enregistrement magnétique de la revendication 1, caractérisé en ce qu'une couche contiguë à la couche la plus externe contient une poudre Fe-Ni.
